# FASCICULE DE BREVET EUROPEEN

(11) **EP 2 936 190 B1**
(45) Date de publication et mention de la délivrance du brevet: **08.05.2019**
(21) Numéro de dépôt: 13814087.6
(22) Date de dépôt: 17.12.2013
(51) Int. Cl.: G01S 7/04, G01S 7/24, G01S 7/51

(54) **PROCÉDÉ DE RÉGLAGE D'UN SECTEUR DE VISION/MASQUAGE D'UN DISPOSITIF DE SCRUTATION D'ENVIRONNEMENT, DISPOSITIF DE RÉGLAGE ET TERMINAL D'OPÉRATEUR CORRESPONDANTS**
VERFAHREN ZUR EINSTELLUNG EINES ANSICHTS-/MASKIERUNGSSEKTORS EINER UMGEBUNGSABTASTUNGSVORRICHTUNG UND ZUGEHÖRIGE EINSTELLUNGSVORRICHTUNG SOWIE BEDIENTERMINAL
METHOD FOR ADJUSTING A VIEWING/MASKING SECTOR OF AN ENVIRONMENT SCANNING DEVICE, AND CORRESPONDING ADJUSTING DEVICE AND OPERATOR TERMINAL

(30) Priorité: 18.12.2012 FR 1203458
(43) Date de publication de la demande: 28.10.2015
(73) Titulaire: THALES, 92200 Neuilly-sur-Seine (FR)
(72) Inventeur: LE PORS, Eric, F-78851 Elancourt (FR); LABORDE, Pierre, F-78851 Elancourt (FR); GRISVARD, Olivier, F-78851 Elancourt (FR); MAHIAS, Yannick, F-78851 Elancourt (FR)
(74) Mandataire: Lavoix
(86) Numéro de dépôt international: PCT/EP2013/076929
(87) Numéro de publication internationale: WO 2014/095883

(56) Documents cités:
- EP-A2- 1 640 740
- WO-A1-2012/021923
- US-A1- 2010 145 195
- US-A1- 2010 321 324
- US-B1- 7 932 853
- AARON FOUTS ET AL: "Synthetic aperture radar data visualization on the iPod Touch", PROCEEDINGS OF SPIE, vol. 7699, 15 avril 2010 (2010-04-15), page 76990G, XP055083618, ISSN: 0277-786X, DOI: 10.1117/12.852725

## Description

La présente invention concerne un procédé de réglage des paramètres au moins d'orientation et d'ouverture d'un secteur angulaire de vision/masquage d'un dispositif de scrutation de l'environnement, intégré dans un système de mission.

Un tel système peut être associé à un porteur tel qu'un aéronef par exemple ou à tout autre type de porteur.

L'invention se rapporte également à un dispositif de réglage et à un terminal d'opérateur de système de vision correspondants.

Plus particulièrement, la présente demande se rapporte aux procédés et méthodes d'interaction homme/machine par exemple adaptés au paramétrage des systèmes de mission en environnement difficile et contraint tel que par exemple dans le domaine aéroporté ou encore naval.

Ces environnements se caractérisent en effet par des mouvements importants du porteur, des vibrations, un bruit relativement élevé, une luminosité restreinte, etc... c'est-à-dire en fait des conditions rendant l'utilisation de ces systèmes assez difficile et délicat et imposant une très grande vigilance à l'opérateur.

Un tel dispositif de scrutation de l'environnement dans un tel système de mission comporte par exemple un radar associé au porteur et comporte alors également un terminal d'opérateur comprenant en outre des moyens d'affichage d'informations et des moyens de réglage des paramètres notamment d'orientation et d'ouverture d'un secteur angulaire de vision/masquage de celui-ci.

Ce secteur est par exemple le secteur balayé ou au contraire non balayé par le faisceau radar d'un aéronef.

Bien entendu d'autres applications peuvent être envisagées.

Ce secteur angulaire de vision/masquage d'un tel dispositif de scrutation est en général un secteur géocentré pour sa partie centrale, sur la position du porteur dont on cherche à représenter une zone de scrutation.

Cette zone de scrutation peut être limitée par une distance, une direction et un angle d'ouverture, par exemple autour d'un aéronef.

De façon pratique, ce secteur peut par exemple concerner un secteur de balayage ou un secteur de masquage du radar, fixé par un opérateur en fonction des besoins de la mission en utilisant des moyens de réglage correspondants mis à sa disposition dans le terminal correspondant.

Le document US 7 932 853 B1 décrit un système de réglage des paramètres d'un radar embarqué sur un aéronef.

Le document « Synthetic Aperture Radar Data Visualization on the iPod Touch » de A. Fouts et al décrit l'utilisation d'un dispositif de type tablette tactile pour la visualisation de données issues d'un radar.

Le document US2010/0321324 A1 décrit un système d'affichage d'images de tomographie par ultrasons.

Dans un terminal de l'état de la technique, les moyens de réglage des paramètres d'orientation et d'ouverture de ce secteur angulaire comprennent par exemple un panneau ou un tableau de réglage comprenant une portion d'afficheur d'orientation de ce secteur angulaire associée par exemple à des boutons ou des zones d'interaction tactile avec un opérateur, permettant à l'opérateur de régler l'orientation de ce secteur en incrémentant/décrémentant l'angle d'orientation affiché.

Le panneau ou tableau de réglage de ce terminal de l'état de la technique comporte également une autre portion d'afficheur pour l'ouverture de ce secteur angulaire.

Cette autre portion d'afficheur est également associée à des boutons ou des zones d'interaction tactile avec l'opérateur, pour lui permettre de régler cette ouverture là aussi en incrémentant/décrémentant la valeur affichée à l'aide des organes de commande mis à sa disposition.

Un bouton ou une zone d'interaction tactile avec l'opérateur pour valider les nouveaux paramètres saisis, peut également être prévu sur ce tableau ou panneau du terminal pour mettre fin aux opérations de réglage.

On conçoit cependant qu'une telle structure présente un certain nombre d'inconvénients dans la mesure où le réglage des paramètres nécessite un grand nombre d'interactions entre l'opérateur et le terminal et une attention soutenue de la part de l'opérateur.

Ces problèmes prennent d'autant plus d'importance que le type de systèmes de mission concernés peut être intégré, comme indiqué précédemment, dans des porteurs soumis à des contraintes externes très fortes ce qui perturbe d'autant l'opérateur.

Un autre problème résulte du fait que les moyens d'affichage d'informations et les moyens de réglage peuvent être distants l'un de l'autre, ce qui ne facilite pas la perception des réglages effectués par l'opérateur.

Le but de l'invention est donc de résoudre ces problèmes.

A cet effet, l'invention a pour objet un procédé de réglage des paramètres au moins d'orientation et d'ouverture d'un secteur angulaire de vision/masquage d'un dispositif de scrutation de l'environnement, intégré dans un système de mission selon la revendication 1.

Selon d'autres caractéristiques du procédé suivant l'invention prises seules ou en combinaison :
- le secteur de vision/masquage du dispositif est affiché en superposition sur le reste d'une situation tactique affichée autour du porteur sur les moyens d'affichage d'informations ;
- le secteur est affiché à une échelle différente de celle du reste de la situation tactique lors de la phase de réglage ;
- l'étape d'interaction tactile de l'opérateur avec les zones d'interaction est réalisée à travers une tablette tactile associée aux moyens d'affichage ;
- l'étape d'interaction tactile de l'opérateur avec les zones d'interaction est réalisée à travers un écran tactile constituant également les moyens d'affichage ;
- l'orientation du secteur est définie par rapport au Nord géographique ;
- l'orientation du secteur est définie par rapport à l'axe de déplacement du porteur ;
- les zones d'interaction tactile sont matérialisées par des cercles d'interaction aux extrémités des rayons ;
- une zone tactile est associée au rayon d'axe central d'orientation du secteur pour permettre à l'opérateur de régler celui-ci et à au moins l'un des rayons de bord latéral du secteur pour permettre à l'opérateur de régler l'ouverture du secteur ;
- une zone d'interaction tactile est associée à chaque rayon de bord latéral pour permettre de régler l'ouverture du secteur ;
- la zone d'interaction tactile associée au rayon d'axe central d'orientation du secteur présente une couleur différente de celle de la zone d'interaction tactile associée au ou à chaque rayon de bord latéral du secteur ;
- le réglage de l'orientation du secteur est obtenu par sélection de la zone tactile associée au rayon d'axe central d'orientation du secteur et déplacement angulaire de celle-ci par l'opérateur afin de régler l'orientation du secteur de façon correspondante ;
- le réglage de l'orientation du secteur est obtenu par sélection des zones tactiles associées aux rayons de bords latéraux du secteur et déplacement angulaire simultané de celles-ci par l'opérateur afin de régler l'orientation du secteur de façon correspondante ;
- le réglage de l'ouverture du secteur est obtenu par sélection de la zone tactile associée à un rayon de bord latéral correspondant du secteur et déplacement angulaire de celle-ci par l'opérateur afin de régler l'ouverture du secteur de façon correspondante ;
- le réglage de l'ouverture du secteur est obtenu par sélection de la zone tactile associée au rayon d'axe central d'orientation du secteur et de la zone tactile associée à un rayon de bord latéral correspondant du secteur et déplacement angulaire relatif de cette dernière par l'opérateur afin de régler l'ouverture du secteur de façon correspondante ;
- le réglage de l'ouverture du secteur est obtenu par sélection des zones tactiles associées aux rayons de bords latéraux correspondants du secteur et déplacement angulaire relatif de celles-ci par l'opérateur afin de régler l'ouverture du secteur de façon correspondante.

Selon un autre aspect, l'invention a également pour objet un dispositif de réglage des paramètres au moins d'orientation et d'ouverture d'un secteur angulaire de vision/masquage d'un dispositif de scrutation de l'environnement, intégré dans un système de mission, et géocentré autour d'un porteur de ce dispositif, comportant des moyens de mise en oeuvre d'un procédé de réglage tel que décrit précédemment.

Selon encore un autre aspect, l'invention a également pour objet un terminal d'opérateur de système de mission comportant au moins un dispositif de scrutation d'environnement et un dispositif de réglage tel que décrit précédemment.

Selon d'autres caractéristiques de ce terminal prises seules ou en combinaison :
- le dispositif de scrutation comporte au moins un élément choisi dans le groupe comprenant :
   - un radar,
   - une caméra,
   - un détecteur ;
- il est embarqué sur un porteur choisi dans le groupe comprenant :
   - une station fixe,
   - un véhicule terrestre,
   - un navire,
   - un aéronef.

L'invention sera mieux comprise à l'aide de la description qui va suivre, donnée uniquement à titre d'exemple et faite en se référant aux dessins annexés, sur lesquels :
- la figure 1 représente un schéma synoptique illustrant la structure et le fonctionnement d'un terminal d'opérateur d'un système de mission de l'état de la technique,
- la figure 2 illustre un exemple de mise en oeuvre d'un procédé de réglage selon l'invention,
- la figure 3 illustre de façon schématique un exemple de réalisation d'un terminal d'opérateur d'un système de mission selon l'invention, et
- les figures 4 à 11 montrent des séquences de réglage illustrant les réglages réalisés à l'aide d'un dispositif selon l'invention.

Comme cela a été indiqué précédemment, l'invention se rapporte à un procédé de réglage des paramètres au moins d'orientation et d'ouverture d'un secteur angulaire de vision/masquage d'un dispositif de scrutation de l'environnement, par exemple intégré dans un système de mission et géocentré autour d'un porteur de ce dispositif.

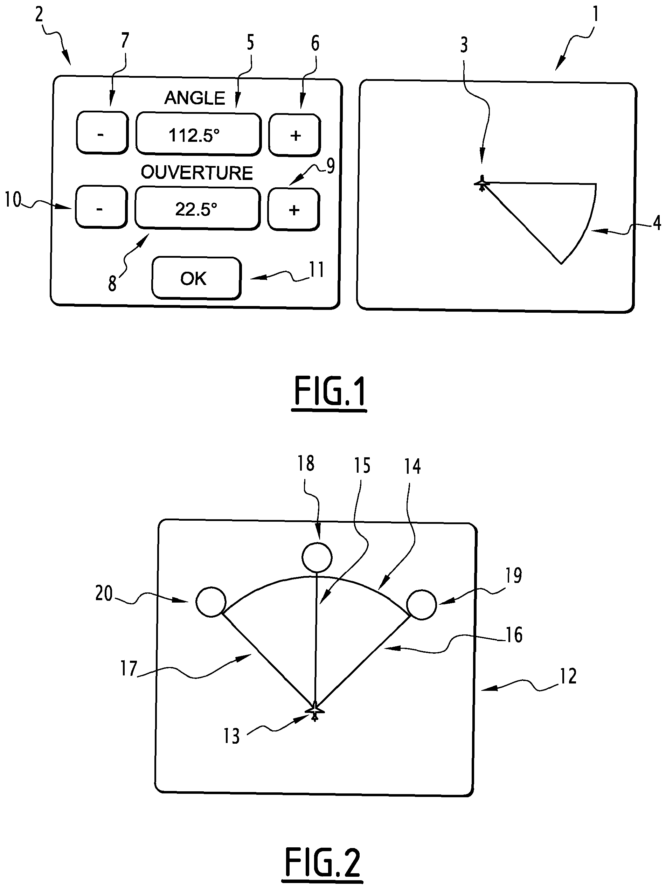

Ce système de mission peut par exemple être un système de mission mettant en oeuvre un radar embarqué par exemple à bord d'un aéronef comme cela est illustré sur la figure 1.

Bien entendu d'autres capteurs tels que des caméras ou autres peuvent également être envisagés.

Dans ce cas, le système de mission comporte un terminal d'opérateur comprenant en outre des moyens d'affichage d'informations désignés par la référence générale 1 sur cette figure 1, et des moyens de réglage des paramètres au moins d'orientation et d'ouverture du dispositif de scrutation, par cet opérateur, ces moyens de réglage étant désignés par la référence générale 2.

Comme cela est illustré sur cette figure 1, les moyens d'affichage d'informations 1 sont alors adaptés pour représenter le porteur du dispositif de scrutation, tel que l'aéronef désigné par la référence générale 3, et pour illustrer le secteur angulaire de vision/masquage du dispositif de scrutation porté par celui-ci, ce secteur étant désigné par la référence générale 4 sur cette figure 1.

Les moyens de réglage par l'opérateur, des paramètres d'orientation et d'ouverture du secteur angulaire de ce dispositif, comportent alors en fait par exemple deux portions d'afficheur, dont une première portion d'affichage de l'orientation de ce secteur, désignée par la référence générale 5 et associée à des boutons ou des zones tactiles par exemple 6 et 7, permettant à l'opérateur de régler l'angle d'orientation.

Ces organes de réglage sont en fait par exemple des organes d'incrémentation/décrémentation de l'orientation.

De même une seconde portion d'affichage désignée par la référence générale 8, permet à l'opérateur de connaître l'ouverture du secteur angulaire et d'agir sur celle-ci pour la régler à l'aide de boutons ou de zones tactiles de réglages 9 et 10 associés à cette portion d'afficheur.

Ces boutons ou zones tactiles permettent également alors à l'opérateur d'incrémenter/décrémenter cette ouverture.

Un bouton ou une zone tactile de validation 11 est par exemple également prévu pour permettre la validation des réglages opérés par l'opérateur et mettre fin aux opérations de réglage.

Comme cela a été indiqué précédemment, ce type de terminal présente un certain nombre d'inconvénients.

Pour résoudre ces problèmes et comme cela est illustré sur la figure 2, l'invention propose un procédé de réglage qui comporte une étape d'activation d'une phase de réglage des paramètres par l'opérateur, pour mettre en évidence sur les moyens d'affichage d'informations désignés par la référence générale 12 sur la figure 2, d'une part, le secteur angulaire de vision/masquage courant du dispositif de scrutation, avec des rayons d'axe central et de bords latéraux du secteur, et d'autre part, des zones d'interaction tactile avec l'opérateur, de déplacement angulaire de ces rayons par l'opérateur, pour régler les paramètres correspondants du dispositif de scrutation.

Ainsi par exemple sur les moyens d'affichage d'informations 12 illustrés sur cette figure 2, le porteur du dispositif de scrutation tel que par exemple un aéronef, est désigné par la référence générale 13 et le secteur angulaire de vision/masquage du dispositif de scrutation de celui-ci, est désigné par la référence générale 14.

Lors de la phase de réglage des paramètres d'orientation et d'ouverture de celui-ci, ce secteur angulaire 14 est alors mis en évidence sur les moyens d'affichage 12, avec son rayon d'axe central d'orientation désigné par la référence générale 15 et ses rayons de bords latéraux, désignés par les références générales 16 et 17 respectivement sue cette figure.

Ceci permet alors de faire percevoir facilement ce secteur à l'opérateur, en le mettant en évidence par exemple en utilisant une ou des caractéristiques d'affichage différentes du reste de la situation tactique affichée sur les moyens d'affichage.

Ainsi par exemple, des couleurs, des échelles, des modes d'affichage par exemple fixe ou à clignotement, etc..., différentes, peuvent être utilisées pour faire ressortir ce secteur.

De plus des zones d'interaction tactile de déplacement angulaire de ces rayons par l'opérateur sont également mises en évidence, pour permettre à cet opérateur de régler facilement et de façon la plus naturelle possible, les paramètres correspondants du dispositif de scrutation.

Il suffit en effet par exemple à l'opérateur de poser un doigt sur une telle zone et de la déplacer en bougeant son doigt pour régler la position du rayon et donc de l'axe correspondant et le déplacer d'une position courante vers une nouvelle position de réglage et piloter/programmer en conséquence, le dispositif de scrutation.

La zone d'interaction tactile associée au rayon d'axe central d'orientation du secteur est désignée par la référence générale 18, tandis que les zones d'interaction tactile associées aux axes de bords latéraux du secteur sont désignées par les références 19 et 20 respectivement, sur cette figure 2.

Comme cela est illustré ces zones sont par exemple matérialisées par des cercles qui peuvent présenter également des caractéristiques d'affichage particulières permettant à l'opérateur de les percevoir très facilement.

Ceci n'est bien entendu qu'un exemple de réalisation possible.

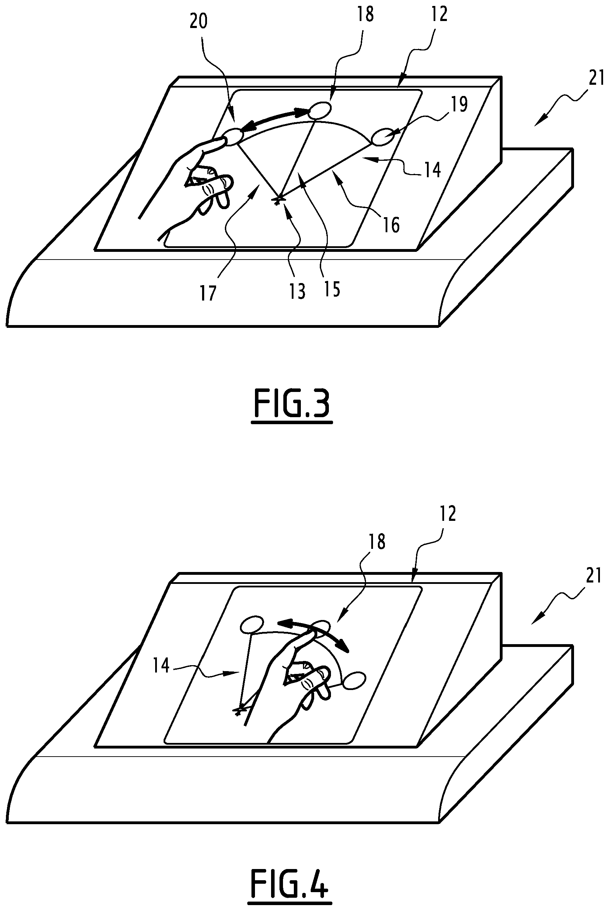

On conçoit alors, comme cela est illustré sur les figures 3 à 11, dans lesquelles on reconnaît les moyens d'affichage 12 décrits précédemment et intégrés dans un terminal d'opérateur 21 d'un système de mission, que le réglage de l'orientation et de l'ouverture du secteur angulaire de vision/masquage du dispositif de scrutation, est réalisé par interaction tactile entre l'opérateur et les zones d'interaction correspondantes, simplement par appui d'un doigt de l'opérateur sur une zone et déplacement de celle-ci et donc du rayon correspondant vers sa nouvelle position de réglage, pour commander en conséquence un réglage du dispositif de scrutation c'est-à-dire par exemple du radar porté par l'aéronef.

Une fois le nouveau réglage obtenu, il est alors possible de valider celui-ci et de piloter/programmer de façon correspondante le dispositif de scrutation afin que celui-ci travaille sur le nouveau secteur défini.

Dans l'exemple illustré dans les différentes figures, les zones d'interaction tactile sont affichées sur un écran tactile constituant également en même temps, les moyens d'affichage d'informations.

Ceci permet de simplifier les interactions entre l'opérateur et le reste du terminal mais il va de soi bien entendu que d'autres modes de réalisation de ce terminal peuvent être envisagés.

Ainsi par exemple une tablette tactile ou tout autre dispositif équivalent, peut également être intégré dans le terminal d'opérateur en association avec les moyens d'affichage tout en étant distinct de ceux-ci.

L'orientation du secteur angulaire du dispositif de scrutation peut être définie par rapport au Nord géographique ou encore par rapport à l'axe de déplacement du porteur comme cela est illustré.

Les zones d'interaction tactile telles que désignées par les références 18, 19 et 20 peuvent être matérialisées de différentes façons sur les moyens d'affichage, comme par exemple par des cercles ou autre patin circulaire ou non, d'interaction avec l'opérateur, et présentant des caractéristiques d'affichage différentes telles que par exemple des couleurs différentes, du reste des informations affichées, permettant à l'opérateur de percevoir le plus rapidement et le plus facilement possible, ces zones d'interaction et leur fonction.

Dans l'exemple illustré, une zone tactile 18 est associée à l'extrémité du rayon d'axe central d'orientation du secteur pour permettre à l'opérateur de régler celui-ci et une zone d'interaction tactile 19 et 20 est associée à l'extrémité de chaque rayon de bord latéral de ce secteur pour permettre à l'opérateur de régler l'ouverture du secteur.

Bien entendu d'autres modes de réalisation peuvent être envisagés, une seule zone d'interaction tactile pouvant être prévue en association avec uniquement l'un des rayons de bord latéral du secteur, pour permettre à l'opérateur de régler l'ouverture de celui-ci en agissant par exemple sur une seule zone d'interaction.

Ainsi par exemple le réglage de l'orientation du secteur peut être obtenu comme cela a été illustré sur la figure 4, par sélection par l'opérateur en y posant un doigt par exemple, de la zone tactile associée au rayon d'axe central d'orientation du secteur, c'est-à-dire la zone tactile 18 associée au rayon 15.

Les déplacements angulaires de celle-ci par l'opérateur permettent alors à l'opérateur de régler cette orientation du secteur angulaire de façon correspondante pour en fait contrôler le fonctionnement du dispositif de scrutation.

D'autres modes de réalisation peuvent être envisagés.

Ainsi par exemple le réglage de l'orientation du secteur peut également être obtenu par sélection simultanée des deux zones d'interaction tactile associées aux rayons de bords latéraux du secteur par l'opérateur.

Des déplacements angulaires simultanés et analogues de celles-ci par l'opérateur lui permettent alors par exemple de régler l'orientation du secteur de façon correspondante.

D'autres modes de réalisation peuvent être envisagés encore.

Le réglage de l'ouverture du secteur peut quant à lui être obtenu par sélection de la zone tactile associée à un rayon de bord latéral correspondant du secteur et déplacement angulaire de celle-ci par l'opérateur, afin de régler l'ouverture du secteur de façon correspondante.

Ceci est par exemple le cas lorsqu'un seul rayon de bord latéral de secteur est associé à une seule zone d'interaction tactile.

Dans ce cas, le déplacement de cette zone et donc de ce rayon de bord par l'opérateur, se traduit par un déplacement correspondant ou non, par exemple symétrique et opposé, de l'autre rayon de bord afin de régler l'ouverture de ce secteur.

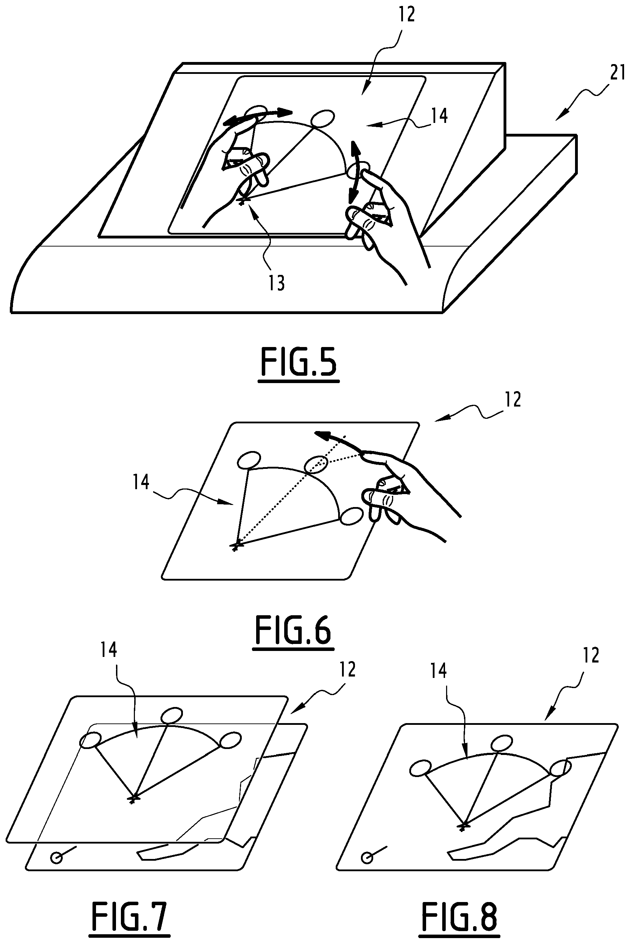

Bien entendu d'autres modes de réalisation peuvent être envisagés comme celui par exemple illustré sur la figure 5.

Dans cette figure le réglage de l'ouverture du secteur est obtenu par sélection simultanée des zones tactiles 19 et 20 associées aux rayons de bords latéraux correspondants du secteur et déplacement angulaire relatif de celles-ci par l'opérateur, pour les rapprocher ou les éloigner angulairement afin de régler l'ouverture du secteur de façon correspondante.

En fait l'opérateur sélectionne alors les zones d'interaction tactile d'extrémité des rayons de bords latéraux du secteur avec deux doigts de la même main ou de ses deux mains et rapproche ou éloigne ces zones angulairement, pour régler l'ouverture angulaire du secteur du dispositif de scrutation.

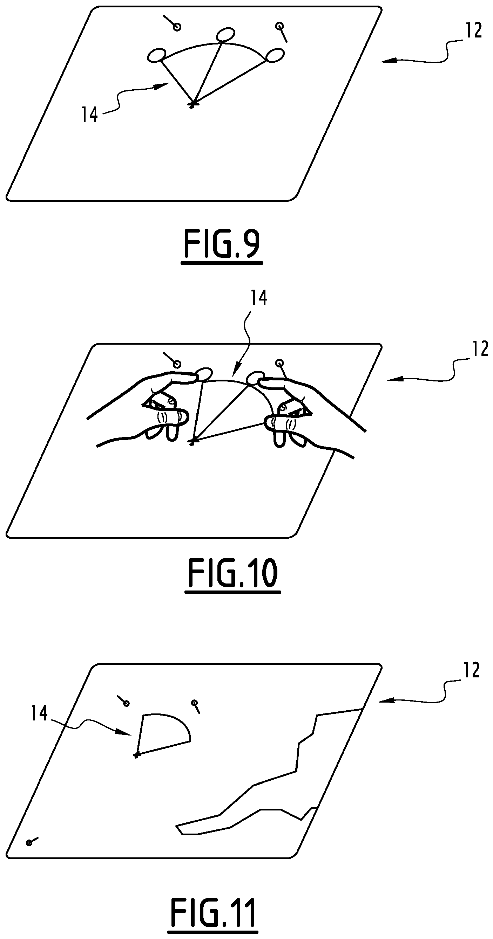

Selon un autre mode de réalisation possible illustré sur la figure 10, le réglage de l'ouverture du secteur est obtenu par sélection de la zone tactile associée au rayon d'axe central d'orientation du secteur et de la zone tactile associée à un rayon de bord latéral de ce secteur et par déplacement angulaire relatif de ces zones par l'opérateur, afin de régler l'ouverture du secteur de façon correspondante.

D'autres façons de procéder à ces réglages peuvent être envisagées.

On a également illustré sur les figures 8 à 11, des séquences de réglage appliquées par exemple par un radar de scrutation de l'environnement et embarqué à bord d'un aéronef se déplaçant dans une zone géographique et un environnement tactique déterminés.

L'ensemble des informations illustrant la situation par exemple tactique de l'aéronef est par exemple visualisé sur des moyens d'affichage d'un terminal d'opérateur d'un système de mission correspondant.

On conçoit alors que lorsque la phase de réglage des paramètres du secteur est activée, le secteur de vision/masquage du dispositif de scrutation est affiché en superposition sur le reste d'une situation tactique affichée autour du porteur sur les moyens d'affichage d'informations comme cela est visible sur ces figures.

Comme cela est également illustré, lors de cette phase, ce secteur peut être affiché à une échelle différente de celle du reste de la situation tactique.

Bien entendu d'autres caractéristiques d'affichage différentes peuvent également être utilisées comme par exemple des couleurs différentes, des clignotements etc.

Ceci permet alors de bien faire ressortir ces données et de faciliter le travail de réglage de l'opérateur.

Comme cela a été décrit précédemment, le procédé de réglage selon l'invention peut alors être mis en oeuvre pour le réglage des paramètres d'un dispositif de scrutation d'environnement intégré dans un système de mission.

Ce dispositif de scrutation peut être, comme cela a été décrit précédemment, un radar mais il peut également comporter au moins une caméra ou des capteurs/détecteurs de natures différentes.

Le porteur peut alors être, comme cela a également été décrit précédemment, un aéronef, mais il peut être également constitué par un navire, un véhicule terrestre, voire une station fixe.

## Revendications

1. Procédé de réglage des paramètres au moins d'orientation et d'ouverture d'un secteur angulaire (14) de vision/masquage d'un dispositif de scrutation de l'environnement, intégré dans un système de mission, et géocentré autour d'un porteur (13) de ce dispositif, du type comportant un terminal d'opérateur (21) comprenant en outre des moyens d'affichage d'informations (12) et des moyens de réglage de ces paramètres par cet opérateur, **caractérisé en ce qu'**il comporte :
- une étape d'activation d'une phase de réglage des paramètres par l'opérateur, comportant une mise en évidence sur les moyens d'affichage d'informations (12), d'une part, du secteur angulaire de vision/masquage (14) courant du dispositif de scrutation avec ses rayons d'axe central d'orientation (15) et de bords latéraux (16, 17) du secteur et d'autre part, des zones d'interaction tactile (18, 19, 20) de déplacement angulaire de ces rayons par l'opérateur, chaque zone d'interaction tactile étant associée à un des rayons, pour régler les paramètres correspondants du dispositif de scrutation,
- une étape de réglage de l'orientation et de l'ouverture du secteur angulaire de vision/masquage (14) du dispositif de scrutation par interaction tactile entre l'opérateur et les zones d'interaction correspondantes (18, 19, 20) comportant un déplacement angulaire relatif desdites zones d'interaction par l'opérateur et déplacement des rayons correspondants vers leur nouvelle position de réglage, et
- une étape de validation des réglages réalisés par l'opérateur et de programmation correspondante du dispositif de scrutation.

2. Procédé selon la revendication 1, **caractérisé en ce que** le secteur de vision/masquage (14) du dispositif est affiché en superposition sur le reste d'une situation tactique affichée autour du porteur sur les moyens d'affichage d'informations (12).

3. Procédé selon la revendication 2, **caractérisé en ce que** le secteur est affiché à une échelle différente de celle du reste de la situation tactique lors de la phase de réglage.

4. Procédé selon l'une quelconque des revendications précédentes, **caractérisé en ce que** l'étape d'interaction tactile de l'opérateur avec les zones d'interaction (18, 19, 20) est réalisée à travers une tablette tactile associée aux moyens d'affichage (12).

5. Procédé selon l'une quelconque des revendications 1 à 3, **caractérisé en ce que** l'étape d'interaction tactile de l'opérateur avec les zones d'interaction (18, 19, 20) est réalisée à travers un écran tactile constituant également les moyens d'affichage (12).

6. Procédé selon l'une quelconque des revendications précédentes, **caractérisé en ce que** l'orientation du secteur (14) est définie par rapport au Nord géographique.

7. Procédé selon l'une quelconque des revendications 1 à 5, **caractérisé en ce que** l'orientation du secteur (14) est définie par rapport à l'axe de déplacement du porteur.

8. Procédé selon l'une quelconque des revendications précédentes, **caractérisé en ce que** les zones d'interaction tactile (18, 19, 20) sont matérialisées par des cercles d'interaction aux extrémités des rayons.

9. Procédé selon l'une quelconque des revendications précédentes, **caractérisé en ce qu'**une zone tactile (18, 19, 20) est associée au rayon d'axe central (15) d'orientation du secteur (14) pour permettre à l'opérateur de régler celui-ci et à au moins l'un des rayons de bord latéral (16, 17) du secteur (14) pour permettre à l'opérateur de régler l'ouverture du secteur.

10. Procédé selon la revendication 9, **caractérisé en ce qu'**une zone d'interaction tactile (19, 20) est associée à chaque rayon de bord latéral (16, 17) pour permettre de régler l'ouverture du secteur.

11. Procédé selon l'une quelconque des revendications précédentes, **caractérisé en ce que** la zone d'interaction tactile (18) associée au rayon d'axe central (15) d'orientation du secteur (14) présente une couleur différente de celle de la zone d'interaction tactile (19, 20) associée au ou à chaque rayon de bord latéral (16, 17) du secteur.

12. Procédé selon l'une quelconque des revendications précédentes, **caractérisé en ce que** le réglage de l'orientation du secteur est obtenu par sélection de la zone tactile (18) associée au rayon d'axe central (15) d'orientation du secteur et déplacement angulaire de celle-ci par l'opérateur afin de régler l'orientation du secteur de façon correspondante.

13. Procédé selon l'une quelconque des revendications 1 à 12, **caractérisé en ce que** le réglage de l'orientation du secteur est obtenu par sélection des zones tactiles (19, 20) associées aux rayons de bords latéraux (16, 17) du secteur et déplacement angulaire simultané de celles-ci par l'opérateur afin de régler l'orientation du secteur de façon correspondante.

14. Procédé selon l'une quelconque des revendications précédentes, **caractérisé en ce que** le réglage de l'ouverture du secteur est obtenu par sélection de la zone tactile associée (19, 20) à un rayon de bord latéral correspondant (16, 17) du secteur et déplacement angulaire de celle-ci par l'opérateur afin de régler l'ouverture du secteur de façon correspondante.

15. Procédé selon l'une quelconque des revendications 1 à 13, **caractérisé en ce que** le réglage de l'ouverture du secteur est obtenu par sélection de la zone tactile (18) associée au rayon d'axe central (15) d'orientation du secteur et de la zone tactile (19, 20) associée à un rayon de bord latéral correspondant (16, 17) du secteur et déplacement angulaire relatif de cette dernière par l'opérateur afin de régler l'ouverture du secteur de façon correspondante.

16. Procédé selon l'une quelconque des revendications 1 à 13, **caractérisé en ce que** le réglage de l'ouverture du secteur est obtenu par sélection des zones tactiles (19, 20) associées aux rayons de bords latéraux correspondants (16, 17) du secteur et déplacement angulaire relatif de celles-ci par l'opérateur afin de régler l'ouverture du secteur de façon correspondante.

17. Dispositif de réglage des paramètres au moins d'orientation et d'ouverture d'un secteur angulaire (14) de vision/masquage d'un dispositif de scrutation de l'environnement, intégré dans un système de mission, et géocentré autour d'un porteur (13) de ce dispositif,
du type comportant un terminal d'opérateur (21) comprenant en outre des moyens d'affichage d'informations (12) et des moyens de réglage de ces paramètres par cet opérateur, comportant des moyens adaptés à mettre en oeuvre :
- une étape d'activation d'une phase de réglage des paramètres par l'opérateur, comportant une mise en évidence sur les moyens d'affichage d'informations (12), d'une part, du secteur angulaire de vision/masquage (14) courant du dispositif de scrutation avec ses rayons d'axe central d'orientation (15) et de bords latéraux (16, 17) du secteur et d'autre part, des zones d'interaction tactile (18, 19, 20) de déplacement angulaire de ces rayons par l'opérateur, chaque zone d'interaction tactile étant associée à un des rayons, pour régler les paramètres correspondants du dispositif de scrutation,
- une étape de réglage de l'orientation et de l'ouverture du secteur angulaire de vision/masquage (14) du dispositif de scrutation par interaction tactile entre l'opérateur et les zones d'interaction correspondantes (18, 19, 20) comportant un déplacement angulaire relatif desdites zones d'interaction par l'opérateur et déplacement des rayons correspondants vers leur nouvelle position de réglage, et
- une étape de validation des réglages réalisés par l'opérateur et de programmation correspondante du dispositif de scrutation.

18. Terminal d'opérateur de système de mission comportant au moins un dispositif de scrutation d'environnement et un dispositif de réglage selon la revendication 17.

19. Terminal d'opérateur de système de mission selon la revendication 18, **caractérisé en ce que** le dispositif de scrutation comporte au moins un élément choisi dans le groupe comprenant :
- un radar,
- une caméra,
- un détecteur.

20. Terminal d'opérateur de système de mission selon la revendication 18 ou 19, **caractérisé en ce qu'**il est embarqué sur un porteur (13) choisi dans le groupe comprenant :
- une station fixe,
- un véhicule terrestre,
- un navire,
- un aéronef.

## Patentansprüche

1. Verfahren zum Einstellen von Parametern mindestens der Orientierung und der Öffnung eines Sicht/Maskierung-Winkelsektors (14) einer Vorrichtung zum Abtasten der Umgebung, die in einem Missionssystem integriert ist und um einen Träger (13) dieser Vorrichtung geozentriert ist, der Art, die ein Bedienungsterminal (21) aufweist, das außerdem Mittel (12) zum Anzeigen von Informationen und Mittel zum Einstellen dieser Parameter durch diese Bedienperson umfasst, **dadurch gekennzeichnet, dass** es aufweist:
- einen Schritt der Aktivierung einer Einstellphase von Parametern durch die Bedienperson, die auf den Mitteln (12) zur Anzeige von Informationen eine Hervorhebung des aktuellen Sicht/Maskierung-Winkelsektors (14) der Abtastvorrichtung mit seinen Radien der Mittelachse (15) der Orientierung und der Seitenschenkel (16, 17) des Sektors einerseits und von Zonen der taktilen Interaktion (18, 19, 20) der Winkelverschiebung dieser Radien durch die Bedienperson andererseits, wobei jede Zone der taktilen Interaktion einem der Radien zugeordnet ist, um die entsprechenden Parameter der Abtastvorrichtung einzustellen,
- einen Schritt der Einstellung der Orientierung und der Öffnung des Sicht/Maskierung-Winkelsektors (14) der Abtastvorrichtung durch taktile Interaktion zwischen der Bedienperson und den entsprechenden Interaktionszonen (18, 19, 20), der eine relative Winkelverschiebung der Interaktionszonen durch die Bedienperson und eine Verschiebung der entsprechenden Radien zu ihrer neuen Einstellposition aufweist, und
- einen Schritt der Bestätigung der vorgenommenen Einstellungen durch die Bedienperson und der entsprechenden Programmierung der Abtastvorrichtung.

2. Verfahren nach Anspruch 1, **dadurch gekennzeichnet, dass** der Sicht/Maskierung-Sektor (14) der Vorrichtung in Überlagerung auf dem Rest einer um den Träger herum angezeigten taktischen Situation auf den Mitteln (12) zur Anzeige von Informationen angezeigt wird.

3. Verfahren nach Anspruch 2, **dadurch gekennzeichnet, dass** der Sektor bei einem Maßstab angezeigt wird, der unterschiedlich zu dem des Rests der taktischen Situation bei der Einstellphase angezeigt wird.

4. Verfahren nach einem beliebigen der vorhergehenden Ansprüche, **dadurch gekennzeichnet, dass** der Schritt der taktilen Interaktion der Bedienperson mit den Interaktionszonen (18, 19, 20) über ein Tablet, das den Anzeigemitteln (12) zugeordnet ist, realisiert wird.

5. Verfahren nach einem beliebigen der Ansprüche 1 bis 3, **dadurch gekennzeichnet, dass** der Schritt der taktilen Interaktion der Bedienperson mit den Interaktionszonen (18, 19, 20) über einen Tastbildschirm realisiert wird, der gleichfalls die Anzeigemittel (12) bildet.

6. Verfahren nach einem beliebigen der vorhergehenden Ansprüche, **dadurch gekennzeichnet, dass** die Orientierung des Sektors (14) in Bezug auf die grafische Nordrichtung definiert ist.

7. Verfahren nach einem beliebigen der Ansprüche 1 bis 5, **dadurch gekennzeichnet, dass** die Orientierung des Sektors (14) in Bezug auf die Bewegungsachse des Trägers definiert ist.

8. Verfahren nach einem beliebigen der vorhergehenden Ansprüche, **dadurch gekennzeichnet, dass** die taktilen Interaktionszonen (18, 19, 20) durch Interaktionskreise an den Enden der Radien verwirklicht werden.

9. Verfahren nach einem beliebigen der vorhergehenden Ansprüche, **dadurch gekennzeichnet, dass** eine taktile Zone (18, 19, 20) dem Radius der Mittelachse (15) der Orientierung des Sektors (14), um der Bedienperson zu ermöglichen, diesen einzustellen, und mindestens einem der Radien der Seitenschenkel (16, 17) des Sektors (14) zugeordnet ist, um der Bedienperson zu ermöglichen, die Öffnung des Sektors einzustellen.

10. Verfahren nach Anspruch 9, **dadurch gekennzeichnet, dass** eine taktile Interaktionszone (19, 20) jedem Radius der Seitenschenkel (16, 17) zugeordnet, um die Einstellung der Öffnung des Sektors zu ermöglichen.

11. Verfahren nach einem beliebigen der vorhergehenden Ansprüche, **dadurch gekennzeichnet, dass** die taktile Interaktionszone (18), die dem Radius der Mittelachse (15) der Orientierung des Sektors (14) zugeordnet ist, eine Farbe aufweist, die unterschiedlich zu der der taktilen Interaktionszone (19, 20) ist, die dem oder jedem Radius der Seitenschenkel (16, 17) des Sektors zugeordnet ist.

12. Verfahren nach einem beliebigen der vorhergehenden Ansprüche, **dadurch gekennzeichnet, dass** die Einstellung der Orientierung des Sektors durch Auswahl der taktilen Zone (18), die dem Radius der Mittelachse (14) der Orientierung des Sektors zugeordnet ist, und der Winkelverschiebung derselben durch die Bedienperson erhalten wird, um die Orientierung des Sektors in korrespondierender Weise einzustellen.

13. Verfahren nach einem beliebigen der Ansprüche 1 bis 12, **dadurch gekennzeichnet, dass** die Einstellung der Orientierung des Sektors durch Auswahl der taktilen Zonen (19, 20), die den Radien der Seitenschenkel (16, 17) des Sektors zugeordnet sind, und gleichzeitige Winkelverschiebung derselben durch die Bedienperson, um die Orientierung des Sektors in korrespondierender Weise einzustellen.

14. Verfahren nach einem beliebigen der vorhergehenden Ansprüche, **dadurch gekennzeichnet, dass** die Einstellung der Öffnung des Sektors durch Auswahl der taktilen Zone (19, 20), die einem Radius eines entsprechenden Seitenschenkels (16, 17) des Sektors zugeordnet ist, und der Winkelverschiebung desselben durch die Bedienperson erhalten wird, um die Öffnung des Sektors in entsprechender Weise einzustellen.

15. Verfahren nach einem beliebigen der Ansprüche 1 bis 13, **dadurch gekennzeichnet, dass** die Einstellung der Öffnung des Sektors durch Auswahl der taktilen Zone (18), die dem Radius der Mittelachse (15) der Orientierung des Sektors zugeordnet ist, und der taktilen Zone (19, 20), die einem Radius des entsprechenden Seitenschenkels (16, 17) des Sektors zugeordnet ist, und eine relative Winkelverschiebung dieser letzteren durch die Bedienperson erhalten wird, um die Öffnung des Sektors in entsprechender Weise einzustellen.

16. Verfahren nach einem beliebigen der Ansprüche 1 bis 13, **dadurch gekennzeichnet, dass** die Einstellung der Öffnung des Sektors durch Auswahl der taktilen Zonen (19, 20), die den Radien der entsprechenden Seitenschenkel (16, 17) des Sektors zugeordnet sind, und einer relativen Winkelverschiebung derselben durch die Bedienperson erhalten wird, um die Öffnung des Sektors in entsprechender Weise einzustellen.

17. Vorrichtung zum Einstellen von Parametern mindestens der Orientierung und der Öffnung eines Sicht/Maskierung-Winkelsektors (14) einer Abtastvorrichtung der Umgebung, die in einem Missionssystem integriert ist und um einen Träger (13) dieser Vorrichtung geozentriert ist, der Art, die ein Bedienungsterminal (21) aufweist, das außerdem Mittel (12) zur Anzeige von Informationen und Mittel zum Einstellen dieser Parameter durch diese Bedienperson umfasst, umfassend Mittel, die ausgebildet sind, Folgendes durchzuführen:
- einen Schritt der Aktivierung einer Einstellphase von Parametern durch die Bedienperson, die auf den Mitteln (12) zur Anzeige von Informationen ein Hervorheben des aktuellen Sicht/Maskierung-Winkelsektors (14) der Abtastvorrichtung mit seinen Radien der Mittelachse (15) der Orientierung und der Seitenschenkel (16, 17) des Sektors einerseits und von taktilen Interaktionszonen (18, 19, 20) der Winkelverschiebung dieser Radien durch die Bedienperson andererseits, wobei jede taktile Interaktionszone einem der Radien zugeordnet ist, um die entsprechenden Parameter der Abtastvorrichtung einzustellen,
- einen Schritt des Einstellens der Orientierung und der Öffnung des Sicht/Maskierung-Winkelsektors (14) der Abtastvorrichtung durch taktile Interaktion zwischen der Bedienperson und den entsprechenden Interaktionszonen (18, 19, 20), der eine relative Winkelverschiebung der Interaktionszonen durch die Bedienperson und eine Verschiebung der entsprechenden Radien in ihre neue Einstellposition aufweist, und
- einen Schritt der Bestätigung der realisierten Einstellungen durch die Bedienperson und der entsprechenden Programmierung der Abtastvorrichtung.

18. Bedienterminal eines Missionssystems, das mindestens eine Abtastvorrichtung der Umgebung und eine Einstellvorrichtung nach Anspruch 17 umfasst.

19. Bedienterminal eines Missionssystems nach Anspruch 18, **dadurch gekennzeichnet, dass** die Abtastvorrichtung mindestens ein Element aufweist, ausgewählt aus der Gruppe, umfassend:
- einen Radar,
- eine Kamera,
- einen Detektor.

20. Bedienterminal eines Missionssystems nach Anspruch 18 oder 19, **dadurch gekennzeichnet, dass** es in einem Träger (13) mitgeführt wird, der ausgewählt aus der Gruppe ist, die umfasst:
- eine feststehende Station,
- ein Landfahrzeug,
- ein Schiff,
- ein Luftfahrzeug.

## Claims

1. A method of adjusting the parameters at least regarding the orientation and aperture of an angular viewing/masking sector (14) of an environment scanning device, integrated into the mission system, and geocentered around a carrier (13) of that device, comprising an operator terminal (21) further comprising information display means (12) and means for adjusting these parameters by said operator, **characterized in that** it comprises:
- a step of activating a phase of operator adjustment of the parameters, comprising showing on the information display means (12), on the one hand, the current angular viewing/masking sector (14) of the scanning device with its radii indicating the central axis orientation (15) and the lateral edges (16, 17) of the sector, and on the other hand, touch-sensitive interactive zones (18, 19, 20) whereby the operator can angularly move these radii, each touch-sensitive interactive zone being associated to one of the radii, in order to set the corresponding parameters of the scanning device,
- a step of adjusting the orientation and aperture of the angular viewing/masking sector (14) of the scanning device by a touch-sensitive interaction between the operator and the corresponding interactive zones (18, 19, 20) comprising an angular displacement relative to the interactive zones by the user and moving the corresponding radii toward their new adjustment position, and
- a step of validating the adjustments made by the operator and corresponding programming of the scanning device.

2. The method according to claim 1, **characterized in that** the viewing/masking sector (14) of the device is displayed superimposed on the rest of a tactical situation displayed around the carrier on the information display means (12).

3. The method according to claim 2, **characterized in that** the sector is displayed at a different scale from that of the rest of the tactical situation during the adjusting phase.

4. The method according to any one of the preceding claims, **characterized in that** the touch-sensitive interaction step of the operator with the interactive zones (18, 19, 20) is carried out via a touch-sensitive tablet associated with the display means (12).

5. The method according to any one of claims 1 to 3, **characterized in that** the touch-sensitive interaction step of the operator with the interactive zones (18, 19, 20) is carried out via a touch-sensitive screen also constituting the display means (12).

6. The method according to any one of the preceding claims, **characterized in that** the orientation of the sector (14) is defined relative to geographic North.

7. The method according to any one of claims 1 to 5, **characterized in that** the orientation of the sector (14) is defined relative to the movement axis of the carrier.

8. The method according to any one of the preceding claims, **characterized in that** the touch-sensitive interactive zones (18, 19, 20) are embodied by interactive circles at the ends of the radii.

9. The method according to any one of the preceding claims, **characterized in that** a touch-sensitive zone (18, 19, 20) is associated with the radius indicating the central axis of orientation (15) of the sector (14) to allow the operator to adjust the latter and at least one of the radii indicating the lateral edge (16, 17) of the sector (14) to allow the operator to adjust the aperture of the sector.

10. The method according to claim 9, **characterized in that** a touch-sensitive interactive zone (19, 20) is associated with each lateral edge radius (16, 17) to make it possible to adjust the aperture of the sector.

11. The method according to any one of the preceding claims, **characterized in that** the touch-sensitive interactive zone (18) associated with the radius indicating the central orientation axis (15) of the sector (14) has a different color from that of the touch-sensitive interactive zone (19, 20) associated with the or each radius indicating the lateral edges (16, 17) of the sector.

12. The method according to any one of the preceding claims, **characterized in that** the adjustment of the orientation of the sector is obtained by selecting the touch-sensitive zone (18) associated with the radius indicating the central axis (15) of orientation of the sector and angular movement thereof by the operator in order to adjust the orientation of the sector accordingly.

13. The method according to any one of claims 1 to 12, **characterized in that** the adjustment of the orientation of the sector is obtained by selecting touch-sensitive zones (19, 20) associated with the radii indicating the lateral edges (16, 17) of the sector and simultaneous angular movement of the latter by the operator in order to adjust the orientation of the sector accordingly.

14. The method according to any one of the preceding claims, **characterized in that** the adjustment of the aperture of the sector is obtained by selecting the touch-sensitive zone (19, 20) associated with a corresponding radius indicating the lateral edge (16, 17) of the sector and angular movement of the latter by the operator in order to adjust the aperture of the sector accordingly.

15. The method according to any one of claims 1 to 13, **characterized in that** the adjustment of the aperture of the sector is obtained by selecting the touch-sensitive zone (18) associated with the radius indicating the axis of central orientation (15) of the sector and the touch-sensitive zone (19, 20) associated with a corresponding radius indicating the corresponding lateral edge (16, 17) of the sector and relative angular movement of the latter by the operator in order to adjust the aperture of the sector accordingly.

16. The method according to any one of claims 1 to 13, **characterized in that** the adjustment of the aperture of the sector is obtained by selecting touch-sensitive zones (19, 20) associated with the radii indicating the corresponding lateral edges (16, 17) of the sector and relative angular movement of the latter by the operator in order to adjust the aperture of the sector accordingly.

17. A device for adjusting parameters at least regarding the orientation and aperture of an angular viewing/masking sector (14) of an environment scanning device, integrated into a mission system, and geocentered around the carrier (13) of that device, of the type comprising an operator terminal (21) comprising information display means (12) and means for adjusting these parameters by said operator, comprising means adapted to implement:
- a step of activating a phase of operator adjustment of the parameters, comprising showing on the information display means (12), on the one hand, the current angular viewing/masking sector (14) of the scanning device with its radii indicating the central axis orientation (15) and the lateral edges (16, 17) of the sector, and on the other hand, touch-sensitive interactive zones (18, 19, 20) whereby the operator can angularly move these radii, each touch-sensitive interactive zone being associated to one of the radii, in order to set the corresponding parameters of the scanning device,
- a step of adjusting the orientation and aperture of the angular viewing/masking sector (14) of the scanning device by a touch-sensitive interaction between the operator and the corresponding interactive zones (18, 19, 20) comprising an angular displacement relative to the interactive zones by the user and moving the corresponding radii toward their new adjustment position, and
- a step of validating the adjustments made by the operator and corresponding programming of the scanning device.

18. An operator terminal of a mission system including at least one environment scanning device and one adjusting device according to claim 17.

19. The operator terminal of a mission system according to claim 18, **characterized in that** the scanning device includes at least one element chosen from the following group:
- a radar,
- a camera,
- a detector.

20. The operator terminal of a mission system according to claim 18 or 19, **characterized in that** it is onboard a carrier (13) chosen from the following group:
- a stationary station,
- a land vehicle,
- a ship;
- an aircraft.
